(19) Europäisches Patentamt

European Patent Office

Office européen des brevets

(11) **EP 0 718 983 B1**

(12) **FASCICULE DE BREVET EUROPEEN**

(45) Date de publication et mention
de la délivrance du brevet:
**11.07.2001 Bulletin 2001/28**

(51) Int Cl.⁷: **H04B 1/707**

(21) Numéro de dépôt: **95402818.9**

(22) Date de dépôt: **14.12.1995**

(54) **Modulation différentielle à étalement de spectre**

Spreizspektrumdifferenzmodulation

Differential modulation spread spectrum

(84) Etats contractants désignés:
**BE DE ES GB IT NL**

(30) Priorité: **19.12.1994 FR 9415241**

(43) Date de publication de la demande:
**26.06.1996 Bulletin 1996/26**

(73) Titulaire: **COMMISSARIAT A L'ENERGIE
ATOMIQUE
75015 Paris Cédex 15 (FR)**

(72) Inventeur: **Le Roy, Alain
F-38240 Meylan (FR)**

(74) Mandataire: **Signore, Robert et al
c/o BREVATOME
3, rue du Docteur Lanceraux
75008 Paris (FR)**

(56) Documents cités:
**WO-A-92/00639      GB-A- 2 233 860
US-A- 5 353 301**

## Description

### Domaine technique

La présente invention a pour objet un procédé de transmission à modulation et démodulation différentielle de phase à étalement de spectre utilisant des séquences pseudoaléatoires orthogonales.

La technique de modulation à étalement de spectre par séquence directe est utilisée déjà depuis de nombreuses années, en particulier dans les radiocommunications avec les satellites et dans le domaine militaire.

Elle est également utilisée dans la radiolocalisation, comme dans le système dit "Global Positioning System" ou GPS.

Les avantages de cette technique sont multiples :

a) discrétion : cette discrétion est liée à l'étalement de l'information transmise sur une large bande de fréquence. Il en résulte une faible densité spectrale de la puissance émise. Cette caractéristique rend cette technique particulièrement attrayante pour les applications militaires, qui impliquent des systèmes de transmission les plus discrets possibles. Elle est également intéressante pour les applications civiles, car elle rend possible l'attribution d'une même bande de fréquence à des services utilisant les techniques classiques de modulation à étalement de spectre.

b) la résistance aux brouilleurs et aux interférences : un récepteur à étalement de spectre réalise l'opération de corrélation entre le message reçu et la séquence pseudoaléatoire d'étalement, avant toute opération de démodulation. Cette opération de corrélation permet d'extraire le message à recevoir et rejette tout brouilleur ou interférence. La résistance aux brouilleurs est d'autant plus grande que la séquence pseudoaléatoire utilisée pour étaler le spectre est longue. Cette caractéristique est primordiale dans les applications militaires. Elle est également utile dans les applications civiles car il faut éviter, outre les interférences dues aux utilisateurs travaillant en bande étroite, les interférences à large bande engendrées par les autres émissions à étalement de spectre.

c) L'excellent comportement dans les canaux à évanouissement : sous réserve d'utiliser une structure de récepteur asynchrone, cette technique permet de transmettre des données numériques de façon fiable entre mobiles et en présence d'obstacles générateurs de trajets de propagation multiples. Ceci est la conséquence de l'effet de diversité inhérent au système qui permet de démoduler indépendamment les unes des autres toutes les informations véhiculées par tous les trajets de propagation. Cette caractéristique permet d'envisager l'utilisation de cette technique pour toutes les transmissions entre véhicules en milieu urbain, ou pour les liaisons radio à l'intérieur des bâtiments, où des effets d'évanouissement peuvent être engendrés par la présence du personnel constituant des obstacles mobiles pour les ondes radio.

d) possibilité de mettre en oeuvre un protocole d'accès multiple à répartition par les codes : cette technique consiste à affecter des séquences pseudoaléatoires d'étalement orthogonales (c'est-à-dire possédant des coefficients d'intercorrélation faibles) aux différents utilisateurs. Elle reste toutefois difficile à mettre en oeuvre car elle impose une gestion efficace de la puissance d'émission.

La technique de modulation à étalement de spectre par séquence directe est largement décrite dans la littérature spécialisée. Deux ouvrages de référence peuvent être cités : le premier, intitulé "Spread Spectrum Communications" de Marvin K. Simon et al., édité chez Computer Science Press, USA et le second, intitulé "Spread Spectrum Systems" de Robert C. Dixon, édité chez John Wiley and Sons, USA.

### Etat de la technique antérieure

Dans un émetteur de données numériques utilisant une technique de modulation classique, on module une porteuse radioélectrique par modulation de phase, ou de fréquence, ou d'amplitude ou par une modulation mixte. Pour simplifier l'exposé, on se limitera aux modulations de phase, qui sont aujourd'hui les plus utilisées. Les données numériques à transmettre sont des éléments binaires, ou bits. Ces bits ont une période $T_b$, c'est-à-dire qu'à tous les $T_b$ il faut transmettre un nouveau bit. Avec ces bits, on peut constituer des symboles dont la période est notée $T_s$. Ce sont ces symboles qui vont moduler la porteuse radio. Le débit en symboles s'exprime en bauds (ou symboles/secondes).

Deux exemples peuvent illustrer cette technique :

a) La modulation dite BPSK (pour "Binary Phase Shift Keying"). Elle consiste à affecter un état de phase, par exemple 0, aux bits 0, et un autre état de phase, par exemple $\pi$, aux bits 1. Dans ce cas, le symbole est le bit lui-même et $T_s=T_b$. La porteuse radio voit son état de phase imposé tous les bits.

b) La modulation dite QPSK (pour "Quaternary Phase Shift Keying"). Elle consiste à utiliser des symboles formés par deux bits successifs. Ces symboles peuvent donc prendre quatre états (00, 01, 10, 11). On affecte un état de phase de la porteuse à chacun de ces états. Dans ce cas, $T_s=2T_b$. La porteuse radio voit son état de phase imposé tous les deux bits.

Il est possible d'améliorer le spectre du signal radio émis et, en particulier, de diminuer la puissance dans les lobes secondaires parasites, en utilisant des modulations de phase plus sophistiquées, pour lesquelles le signal modulant est mis en forme (filtré) avant modulation. On parle alors de modulations MSK, GMSK, $SRC_4$, etc...

Côté réception, on distingue deux grandes familles de démodulation : la démodulation cohérente et la démodulation non cohérente. Les techniques de démodulation cohérente consistent à réaliser, dans le récepteur, un sous-ensemble dont le rôle est d'estimer la phase moyenne de la porteuse, de manière à reconstituer une référence de phase. Cette référence de phase est ensuite mélangée avec le signal reçu pour démoduler les données.

Cette technique est la plus performante dans les canaux radio où un bruit de type gaussien s'ajoute au signal utile. C'est le cas, par exemple, des transmissions avec les satellites. Mais, en présence de trajets multiples, cette technique donne de très mauvais résultats.

La technique de démodulation non cohérente est fondée sur l'observation selon laquelle il suffit que la référence de phase du symbole en cours soit la phase du symbole précédent. Dans ce cas, le récepteur n'estime pas la phase des symboles mais la différence de phase entre deux symboles successifs. On se trouve alors en présence de modulation différentielle de phase DPSK ("Differential Phase Shift Keying") ou DQPSK ("Differential Quadrature Phase Shit Keying").

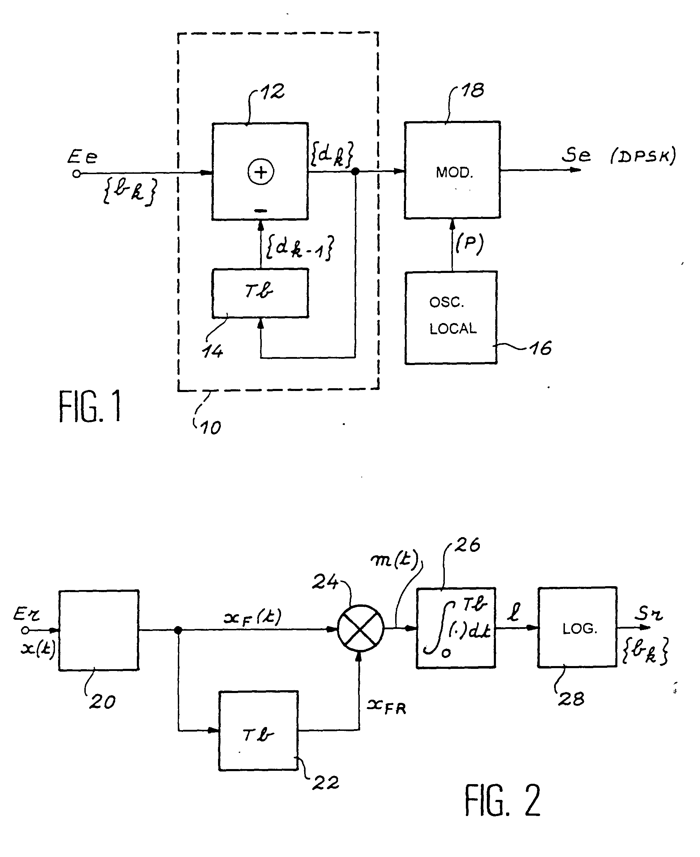

La figure 1 annexée montre le schéma synoptique d'un émetteur DPSK. Cet émetteur possède une entrée Ee, qui reçoit les données $b_k$ à transmettre, lesquelles ont une période $T_b$, et il comprend un codeur différentiel 10 composé d'un circuit logique 12 et d'un circuit à retard 14, un oscillateur local 16 délivrant une porteuse P et un modulateur 18 relié à une sortie Se qui délivre le signal DPSK.

Le circuit logique 12 reçoit les données binaires $b_k$ et délivre d'autres données binaires appelées symboles et notées $d_k$. Le circuit logique 12 reçoit également les symboles retardés d'une période $T_b$, soit $d_{k-1}$. L'opération logique effectuée dans le circuit 12 est l'opération OU-exclusif sur les données $b_k$ et sur le complément de $d_k$ retardé d'un rang (c'est-à-dire $\overline{d_{k-1}}$). On a donc : $d_k=b_k\oplus\overline{d_{k-1}}$

Le modulateur 18 module en phase la porteuse P en fonction de chaque symbole $d_k$.

La figure 2 annexée montre le schéma synoptique d'un récepteur correspondant, du type démodulateur différentiel. Ce récepteur possède une entrée Er et comprend un filtre passe-bande 20, un circuit à retard 22 d'une durée Tb, un multiplieur 24, un intégrateur 26 qui opère sur une période Tb et un circuit logique de décision 28. Le récepteur possède une sortie Sr qui restitue les données $b_k$.

La bande passante du filtre d'entrée 20 est comprise entre la bande de NYQUIST (égale à $1/T_b$) et la largeur du lobe principal du signal DPSK, (qui vaut $2/T_b$).

Si l'on note x(t) le signal reçu appliqué sur l'entrée Er, le multiplieur 24 reçoit un signal filtré $x_F(t)$ émanant directement du filtre 20 et un signal filtré-retardé $x_{FR}$ émanant du circuit à retard 22. Il délivre un signal produit noté m(t) qui est intégré sur une période $T_b$ dans l'intégrateur 26. Celui-ci délivre un signal dont la polarité permet de déterminer la valeur du bit transmis, ce que décide la logique 28.

La technique à étalement de spectre par séquence directe consiste à multiplier la suite des symboles $d_k$ obtenue après le codage différentiel par une séquence pseudoaléatoire ayant un débit beaucoup plus élevé que le débit des données à transmettre. Cette séquence pseudoaléatoire possède un débit binaire N fois plus élevé que le débit des données binaires à transmettre. La durée $T_c$ d'un élément binaire de cette séquence pseudoaléatoire, élément appelé aussi "chip", est donc égale à $T_b/N$.

Le débit en "chips" de la séquence pseudoaléatoire peut être de plusieurs Mégachips, voire plusieurs dizaines de Mégachips par seconde.

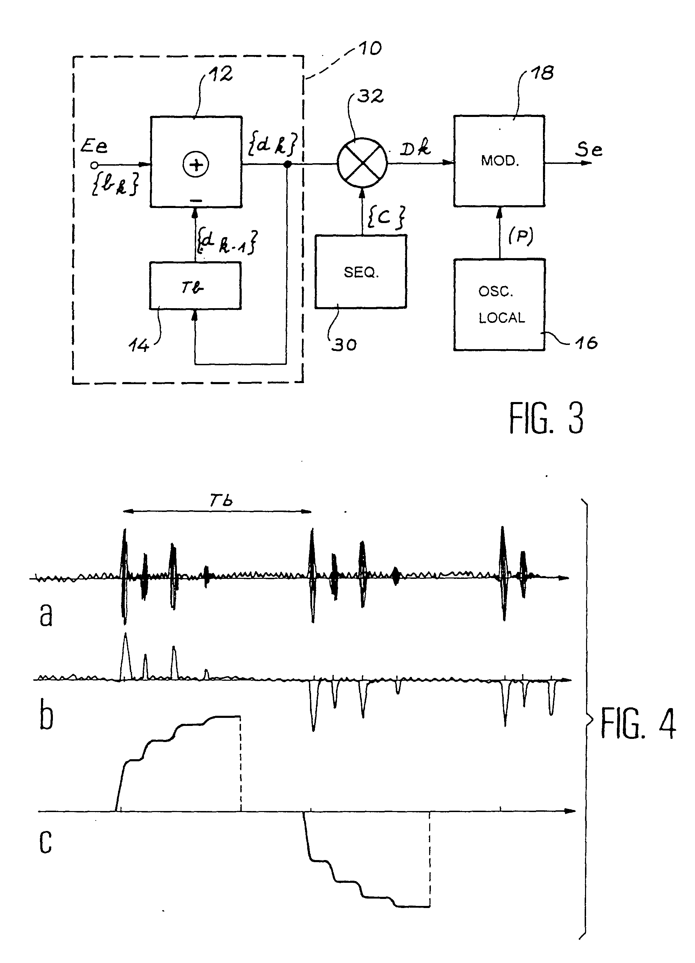

La figure 3 montre le schéma synoptique d'un émetteur à étalement de spectre par séquence directe. Les éléments déjà représentés sur la figure 1 portent les mêmes références. L'émetteur comprend, en plus de celui de la figure 1, un générateur 30 de séquence pseudoaléatoire (C) et un multiplieur 32. Le signal délivré par le multiplieur a un spectre étalé par la séquence pseudoaléatoire. Le modulateur 18 travaille alors non plus sur le symbole d'origine $d_k$ mais sur le symbole étalé correspondant $D_k$.

Le récepteur correspondant présente la même structure que le récepteur de la figure 2, si ce n'est que le filtre 20 est maintenant un filtre adapté dont la réponse impulsionnelle ramenée en bande de base est le complexe conjugué renversé dans le temps de la séquence pseudoaléatoire utilisée dans l'émetteur.

La séquence pseudoaléatoire utilisée à l'émission doit posséder une fonction d'autocorrélation présentant un pic marqué (de valeur N) pour un retard nul et des lobes secondaires le plus faible possible. Ceci peut être obtenu en utilisant des séquences de longueur maximale (appelées aussi m-séquences) ou des séquences dites de GOLD ou de KASAMI par exemple.

Les séquences utilisables dans un système à étalement de spectre ont fait l'objet d'études intensives. Ces études sont résumées dans l'article intitulé "Cross-correlation Properties of Pseudorandom and Related Sequences", par Dilip V. SARWATE et Michael B. PURSLEY, publié dans la revue "Proceedings of the IEEE", vol. 68, n°5, mai 1980, pp. 593 à 619.

Le filtre d'entrée utilisé dans un récepteur à étalement de spectre possède une réponse impulsionnelle équivalente en bande de base notée H(t) et cette réponse doit être le complexe conjugué renversé dans le temps de la séquence pseudoaléatoire utilisée à l'émission :

$$H(t) = C^*(T_S - t)$$

où C(t) est la séquence pseudoaléatoire utilisée à l'émission.

Le signal délivré par un tel filtre vaut donc :

$$x_F(t) = x(t) * H(t)$$

où le signe * désigne l'opération de convolution. On a donc :

$$x_F(t) = \int_{t-T_s}^{t} x(s).C^* (T_S-t+s)\,ds.$$

Le filtre adapté réalise donc la corrélation entre le signal appliqué à son entrée et la séquence pseudoaléatoire d'étalement.

Dans un canal à bruit additif gaussien, le signal $x_F(t)$ va donc se présenter sous la forme d'un signal impulsionnel dont la fréquence de répétition est égale à $1/T_b$. L'enveloppe de ce signal est la fonction d'autocorrélation du signal C(t). L'information est véhiculée par la différence de phase entre deux pics de corrélation successifs.

La sortie du multiplieur va donc être formée d'une succession de pics positifs ou négatifs, suivant la valeur du bit transmis.

Dans le cas d'une transmission radioélectrique en présence de trajets multiples, la sortie du filtre adapté va être formée d'une succession de pics de corrélation, chaque pic correspondant à un trajet de propagation.

Les différents signaux de la chaîne de réception sont représentés sur la figure 4 annexée. La ligne (a) représente le signal filtré $x_F(t)$ ; la ligne (b) le signal de corrélation $x_F(t)^*x_F(T_S-t)$ ; la ligne (c) le signal à la sortie de l'intégrateur.

Cette technique connue est décrite en détail dans l'article intitulé "Direct-Sequence Spread Spectrum with DPSK Modulation and Diversity for Indoor Wireless Communications", publié par Mohsen KAVEHRAD et Bhaskar RAMAMURTHI dans la revue "IEEE Transactions on Communications", vol. COM 35, n°2, février 1987.

Le document GB-A-2233860 décrit un procédé de transmission de données par modulation et démodulation différentielle de phase à étalement de spectre, les données étant organisées en une suite de données binaires ayant une certaine période.

Dans ce qui précède, la modulation à étalement de spectre DPSK a été décrite. Il est évident que cette technique peut s'appliquer de la même manière à toutes les modulations différentielles. Dans le cas de la modulation DQPSK par exemple, chaque pic de corrélation en sortie du filtre adapté pourra prendre quatre états de phase, alors qu'il n'y en avait que deux avec une modulation DPSK.

Malgré leur grand intérêt, ces techniques présentent des inconvénients. En effet, les bits successifs constituant le message à émettre sont tous multipliés par la même- séquence pseudoaléatoire d'étalement, ce qui peut engendrer un bruit d'intercorrélation cohérent pouvant détériorer la qualité du signal m(t) en sortie du démodulateur.

Le Demandeur a étudié de manière approfondie cette question et l'on peut résumer ses travaux de la manière suivante. On considère à nouveau l'émetteur représenté sur la figure 3 et le récepteur de la figure 2 sachant que ce dernier travaille avec un filtre adapté 20 correspondant à une séquence pseudoaléatoire déterminée. De façon générale, on notera $C_R$ la séquence utilisée à la réception et $C_E$ la séquence utilisée à l'émission. Lorsque l'émetteur et le récepteur sont adaptés l'un à l'autre, on a évidemment $C_E \equiv C_R$.

En bande de base, le signal à l'entrée du filtre adapté 20 peut s'écrire :

$$x(t) = dC_E(t)$$

d représentant la suite des éléments binaires modulant la porteuse, ces éléments étant obtenus à partir des données binaires à transmettre $\underline{b}$ après passage dans le codeur différentiel 10.

Le signal filtré que l'on trouve en sortie du filtre adapté peut alors s'écrire :

$$x_F(t) = \int_{t-T_b}^{t} x(s)C_R^*\left(s - t + T_b\right)ds$$

$C_R^*$ représentant le complexe conjugué de $C_R$.

Ceci peut encore s'écrire :

$$x_F(t) = d_{-1}\int_{t-T_b}^{0} C_E(s + T_b C_R^*(s - t + T_b))ds + do\int_{o}^{t}C_E(s)C_R^*(s - t + T_b)ds$$

ou encore

$$x(t) = d_{-1}C_{C_E,C_R}(-t) + d_0 C_{C_E,C_R}(T_b - t)$$

où la notation $C_{C_E,C_R}$ représente la fonction de corrélation apériodique entre $C_E$ et $C_R$.

Dans le cas où $C_E \equiv C_R$, on obtient la même formule en remplaçant les $C_{C_E,C_R}$ par $C_{C_R}$ qui est la fonction d'autocorrélation apériodique de $C_R$.

Le signal filtré-retardé que l'on trouve en sortie du circuit à retard 22 est simplement décalé d'un symbole. Il peut donc s'écrire :

$$x_{FR}(t) = d_{-2}C_{C_E,C_R}(-t) + d_{-1}C_{C_E,C_R}(T_b - t).$$

Enfin, en sortie du démodulateur 24, le signal peut s'écrire :

$$m(t) = x_F(t).x_{FR}(t)$$

soit

$$m(t) = d_{-2}d_{-1}C_{C_E,C_R}^2(-t) + [d_{-1}^2 + d_{-2}d_0]C_{C_E,C_R}(-t). C_{C_E,C_R}(T_b - t) + d_{-1}d_0C_{C_E,C_R}^2(T_b - t)$$

Comme les symboles d sont obtenus à partir des données b par la relation $d_k = b_k \oplus \overline{d_{k-1}}$ et comme $\underline{d}$ ou $\underline{b}$ ne peuvent prendre que les deux valeurs +1 ou -1, on a nécessairement :

$$d_{-2}d_{-1} = b_{-1}, d_{-1}.d_0 = b_0 \text{ et } d_{-1}^2 + d_{-2}.d_0 = 1 + b_{-1}.b_0$$

On obtient donc une nouvelle expression du signal de démodulation m(t) :

$$m(t) = b_{-1}C_{C_E,C_R}^2(-t) + [1 + b_0 b_{-1}]C_{C_E,C_R}(-t)C_{C_E,C_R}(T_b - t)$$
$$+ b_0 C_{C_E,C_R}^2(T_b - t)$$

Trois cas peuvent alors se présenter selon les valeurs respectives de $b_0$ et de $b_{-1}$.

Cas n°1 : $\underline{b_0}$=$\underline{b_{-1}}$=1

On obtient alors :

$$m(t) = [C_{C_E,C_R}(-t) + C_{C_E,C_R}(T_b - t)]^2 = \theta_{C_E,C_R}^2(T_b - t)$$

où $\theta_{C_E,C_R}^2$ est appelée fonction de corrélation paire de $C_E$ et $C_R$.

Cas n°2 : $b_{-1}=b_0=-1$

$$m(t) = -[C_{C_E,C_R}(-t) - C_{C_E,C_R}(T_b - t)]^2 = -\hat{\theta}^2_{C_E,C_R}(T_b - t)$$

où $\hat{\theta}^2_{C_E,C_R}$ est appelée fonction d'autocorrélation impaire de $C_E$ et $C_R$.

Cas n°3 : $b_{-1}=-b_0$

$$m(t) = b_0[C^2_{C_E,C_R}(T_b - t) - C^2_{C_E,C_R}(-t)] = b_0\theta_{C_E,C_R}(T_b - t).\hat{\theta}_{C_E,C_R}(T_b - t)$$

Ces considérations ayant été développées, le défaut de la technique classique de l'étalement de spectre par séquence directe apparaît clairement. En effet, dans les deux premiers cas au moins, le signal de démodulation m(t) est soit toujours positif, soit toujours négatif. Or, c'est ce signal qui va être intégré dans le circuit 26 avant la prise de décision. Idéalement, ce signal devrait, en dehors du pic de corrélation obtenu pour t=0, avoir une valeur moyenne nulle. Cela n'est manifestement pas le cas et la sortie de l'intégrateur va donc présenter, au moment de la prise de décision, une valeur de décalage positive ou négative importante du fait de l'intégration d'un signal dont la valeur moyenne n'est pas nulle. Ces décalages vont détériorer la qualité de la prise de décision et vont augmenter le taux d'erreur de bit, et ceci d'autant plus que la durée d'intégration sera longue.

La présente invention a justement pour but de remédier à cet inconvénient et vise à améliorer la qualité du signal de sortie du démodulateur (signal m(t)) et, ce faisant, la qualité de la transmission.

**Exposé de l'invention**

A cette fin, l'invention propose un nouveau procédé de transmission par modulation et démodulation différentielle de phase à étalement de spectre dans lequel, essentiellement, on utilise deux séquences pseudoaléatoires à l'émission, orthogonales l'une à l'autre, ces deux séquences servant à étaler le spectre des symboles, lesquels viendront ensuite moduler une porteuse. A la réception, on effectuera deux filtrages adaptés à ces deux séquences orthogonales. Pour obtenir le signal de démodulation, on multipliera le signal filtré-retardé associé à l'une des séquences par le signal filtré (mais non retardé) associé à l'autre séquence. Comme ces deux signaux résultent de filtrages par des filtres dont les réponses impulsionnelles sont orthogonales (au sens de NYQUIST), les parasites affectant ces signaux seront décorrélés ce qui diminuera leur influence sur le signal de démodulation. Dans l'art antérieur, les deux signaux respectivement filtré-retardé et filtré émanaient du même filtre, de sorte que les parasites les affectant étaient corrélés.

De façon précise, la présente invention a pour objet un procédé de transmission de données par modulation et démodulation différentielle de phase à étalement de spectre, dans lequel, les données étant organisées en au moins une suite de données binaires ayant une certaine période, caractérisé par le fait que :

A) à l'émission :

-   on effectue un codage différentiel des données binaires à transmettre pour obtenir des symboles, on utilise deux séquences pseudoaléatoires orthogonales pour étaler le spectre de chaque symbole et on module une porteuse par les symboles à spectre étalé,

B) à la réception :

-   on effectue deux filtrages parallèles adaptés aux deux séquences orthogonales et on estime la différence de phase entre les deux signaux obtenus après filtrage l'un ayant été retardé, ce qui restitue les données.

L'invention présente plusieurs modes de réalisation selon que l'on transmet un seul flux de données, ou deux, ou plus de deux.

**Brève description des dessins**

- la figure 1, déjà décrite, montre le schéma synoptique d'un émetteur à codage différentiel selon l'art antérieur ;
- la figure 2, déjà décrite, montre le schéma synoptique d'un récepteur correspondant ;
- la figure 3, déjà décrite, montre le schéma synoptique d'un émetteur à étalement de spectre par séquence directe selon l'art antérieur ;
- la figure 4, déjà décrite, montre l'allure de différents signaux apparaissant dans un récepteur à étalement de spectre par séquence directe ;
- la figure 5 est un schéma synoptique d'un émetteur conforme à l'invention dans une première variante à un seul flux de données à transmettre ;
- la figure 6 est un schéma synoptique d'un récepteur correspondant ;
- la figure 7 montre symboliquement le principe de transmission d'un flux unique de données ;
- la figure 8 montre symboliquement le principe de transmission de deux flux de données simultanément ;
- la figure 9 montre la structure d'un émetteur correspondant à une double transmission de données ;
- la figure 10 montre la structure du récepteur correspondant ;
- la figure 11 illustre symboliquement une transmission de trois flux de données avec trois séquences pseudoaléatoires orthogonales deux à deux ;
- la figure 12 illustre une variante à transmission de deux symboles avec des débits moitié ;
- la figure 13 illustre un mode de réalisation d'un récepteur à composant à ondes acoustiques de surface.

**Exposé détaillé de modes de réalisation**

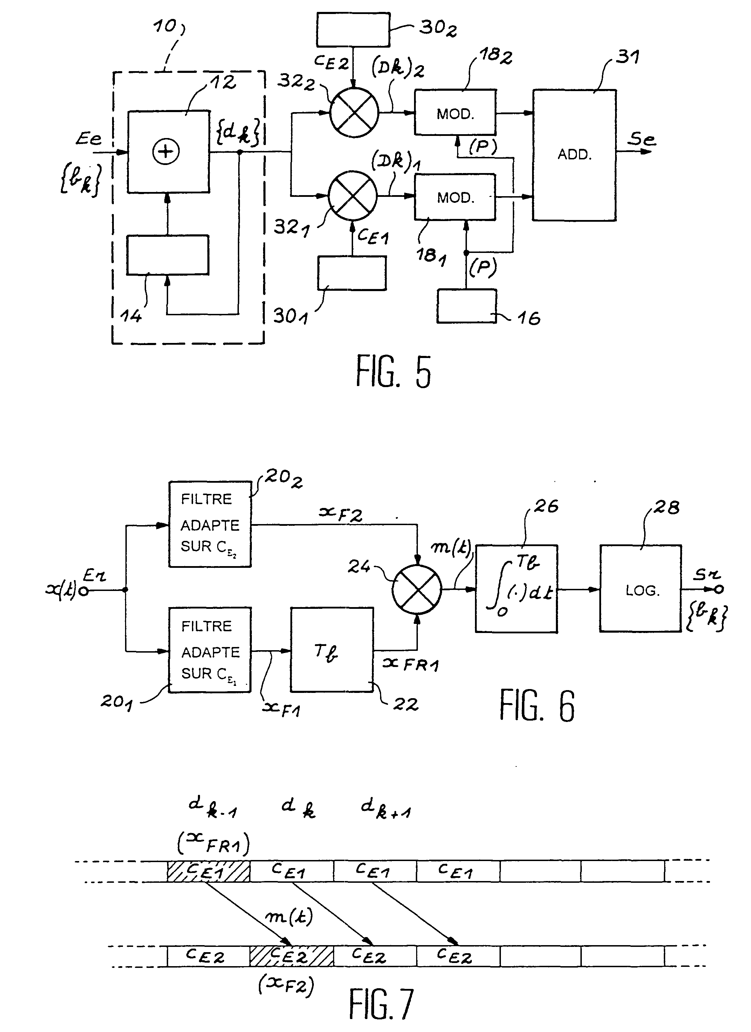

Sur la figure 5, est représenté un schéma d'un mode particulier de réalisation d'un émetteur selon l'invention. Cet émetteur comprend des moyens déjà représentés sur la figure 3 et qui portent les mêmes références, à savoir une entrée Ee recevant les données binaires $b_k$ à transmettre, ces données ayant une période $T_b$, un codeur différentiel 10 avec son circuit logique 12 et son circuit à retard 14. Ce codeur délivre des symboles $d_k$. L'émetteur représenté comprend en outre, un premier générateur $30_1$ délivrant une première séquence pseudoaléatoire $C_{E1}$ appliquée sur un premier multiplieur $32_1$ et un second générateur $30_2$ délivrant une seconde séquence pseudoaléatoire $C_{E2}$ appliquée sur un second multiplieur $32_2$. Les multiplieurs $32_1$ et $32_2$ délivrent des symboles $(D_k)_1$ et $(D_k)_2$ dont le spectre est étalé par les séquences correspondantes. L'émetteur comprend encore un premier modulateur $18_1$ recevant une porteuse P produite par un oscillateur local 16 et les symboles $(D_k)_1$ étalés par la première séquence pseudoaléatoire $C_{E1}$ et un second modulateur $18_2$ recevant cette même porteuse P et les symboles $(D_k)_2$ étalés par la seconde séquence pseudoaléatoire $C_{E2}$. Enfin, un additionneur 31 est relié aux deux modulateurs $18_1$ et $18_2$ et alimente la sortie Se de l'émetteur. Cette sortie émet la porteuse modulée par le signal doublement étalé. La modulation peut être quelconque (phase, fréquence, mixte, etc...).

Naturellement, on pourrait modifier ce circuit en ajoutant d'abord les deux signaux étalés $(D_k)_1$ et $(D_k)_2$ et en utilisant un seul modulateur. On pourrait aussi ajouter les deux séquences pseudoaléatoires $C_{E1}$ et $C_{E2}$ dès leur formation et étaler le signal à l'aide de la somme pseudoaléatoire obtenue.

Le récepteur représenté sur la figure 6 comprend des moyens déjà représentés sur la figure 2, à savoir une entrée Er recevant un signal x(t), un circuit à retard 22 d'une durée égale à la période Tb des bits transmis, un multiplieur 24, délivrant un signal de démodulation m(t), un circuit d'intégration 26 agissant sur le signal m(t) délivré par le multiplieur 24, l'intégration s'effectuant entre 0 et $T_b$, un circuit logique de décision 28 et une sortie générale Sr délivrant finalement les données numériques $b_k$ d'origine. Ce récepteur se distingue de l'art antérieur en ce qu'il comprend un premier filtre $20_1$ adapté à la première séquence pseudoaléatoire $C_{E1}$ utilisée dans l'émetteur et un second filtre $20_2$ adapté à la seconde séquence pseudoaléatoire $C_{E2}$ utilisée dans l'émetteur. Par filtre adapté à une séquence pseudoaléatoire on entend encore un filtre dont la réponse impulsionnelle ramenée en bande de base est le complexe conjugué renversé dans le temps de la séquence pseudoaléatoire en question.

Le premier filtre $20_1$ délivre un signal filtré $x_{F1}$ qui est ensuite retardé de $T_b$ dans un circuit 22 pour donner un signal filtré-retardé $x_{FR1}$. Le second filtre $20_2$ délivre un signal filtré $x_{F2}$. Ce signal n'est pas retardé et sert à produire le signal de démodulation m(t) par multiplication avec le signal filtré-retardé $x_{FR1}$.

Le fonctionnement précis de cet ensemble émetteur-récepteur est le suivant.

Comme dans le cas de la modulation classique à étalement de spectre par séquence directe, les quantités binaires qui vont être utilisées pour moduler la porteuse sont les symboles $d_k$ obtenus à partir des données d'origine $b_k$ après passage dans le codeur différentiel 10. Dans le procédé classique, les symboles $d_k$ sont multipliés par une seule séquence pseudoaléatoire $C_E$. Dans le procédé selon l'invention, les symboles $d_k$ sont multipliés par les deux séquences pseudoaléatoires $C_{E1}$ et $C_{E2}$, orthogonales entre elles, pour former un signal qui va moduler la porteuse.

Les séquences $C_{E1}$ et $C_{E2}$ peuvent avoir les mêmes caractéristiques générales qu'une séquence utilisée dans la technique classique. Elles sont toutes les deux constituées de N éléments ou "chips" ayant une période $T_c = \frac{T_b}{N}$ et leurs fonctions d'autocorrélation présentent un seul pic marqué pour un retard nul. Elles ont une valeur la plus faible possible partout ailleurs. Ces séquences sont en outre choisies de manière à avoir une fonction d'intercorrélation faible quel que soit le temps.

S'agissant du récepteur, le signal d'entrée x(t) peut s'écrire :

$$x(t) = d(C_{E1}(t) + C_{E2}(t))$$

Le signal filtré-retardé $x_{FR1}$ en sortie du circuit à retard 22 peut s'écrire :

$$x_{FR1} = d_{-2}[C_{CE1,CE1}(-t) + C_{CE2,CE1}(-t)]$$

$$+d_{-1}[C_{CE1,CE1}(T_b - t) + C_{CE2,CE1}(T_b - t]$$

De même, le signal filtré $x_{F2}$ en sortie du filtre $20_2$ peut s'écrire:

$$x_{F2} = d_{-1}[C_{CE1,CE2}(-t) + C_{CE2,CE2}(-t)]$$

$$+d_0[C_{CE1,CE2}(T_b - t) + C_{CE2,CE2}(T_b - t)]$$

En sortie du multiplieur 24, le signal de démodulation est de la forme : $m(t) = x_{FR1} \cdot x_{F2}$

On peut alors distinguer quatre cas :

Cas n°1 : $b_0 = b_{-1} = 1$

On a alors $d_{-2} = d_{-1} = d_0$. Il est alors possible de réécrire $x_{FR1}$ et $x_{F2}$ sous la forme suivante :

$$x_{FR1} = d_{-1}[\theta_{CE1}(T_b - t) + \theta_{CE2,CE1}(T_b - t)]$$

et

$$x_{F2} = d_{-1}[\theta_{CE1,CE2}(T_b - t) + \theta_{CE2}(T_b - t)]$$

d'où, après simplification des écritures et en remplaçant $\theta_{CEi,CEj}(T_B - t)$ par $\theta_{ij}$ :

$$m(t) = \theta_{11} \cdot \theta_{12} + \theta_{11} \cdot \theta_{22} + \theta_{21} \cdot \theta_{12} + \theta_{21} \cdot \theta_{22}$$

Pour $t = T_b$, on retrouve évidemment $m(0) = \theta_{11}(0) \cdot \theta_{22}(0) + ...$ soit $N^2$, ce qui correspond au pic d'autocorrélation.

Une analyse détaillée du signal m(t) permet de voir que, dans le cas où les deux séquences utilisées pour moduler les données sont orthogonales, le signal m(t) est à valeur moyenne nulle en dehors du pic de corrélation. Donc, dans ce cas, la sortie de l'intégrateur 26 ne présente pas de décalage comme c'était le cas avec la structure classique.

Cas n°2 : $b_0 = b_{-1} = -1$

Dans ce cas, on a $d_0 = -d_{-1} = -d_{-2}$. On peut donc réécrire $x_{FR1}$ et $x_{F2}$ sous la forme suivante, avec les mêmes notations simplificatrices que précédemment :

$$X_{FR1} = d_{-1}[\overset{\prime\prime}{\theta}_{11} + \overset{\prime\prime}{\theta}_{21}]$$

$$X_{F2} = -d_{-1}[\ddot{\theta}_{12} + \ddot{\theta}_{22}]$$

d'où

$$m(t) = \ddot{\theta}_{11} \cdot \ddot{\theta}_{12} + \ddot{\theta}_{11} \cdot \ddot{\theta}_{22} + \ddot{\theta}_{21} \cdot \ddot{\theta}_{12} + \ddot{\theta}_{21} \cdot \ddot{\theta}_{22}$$

Toutes les remarques faites à propos du cas n°1 sont encore valables.

Cas n°3 : $b_0$=1 $b_{-1}$=-1

Dans ce cas, on a $d_0$=$d_{-1}$=-$d_{-2}$
d'où

$$x_{FR1} = d_{-1}[\ddot{\theta}_{11} + \ddot{\theta}_{21}]$$

$$x_{F2} = d_{-1}[\ddot{\theta}_{12} + \ddot{\theta}_{22}]$$

et

$$m(t) = \ddot{\theta}_{11} \cdot \theta_{12} + \ddot{\theta}_{21} \cdot \theta_{12} + \ddot{\theta}_{11} \cdot \theta_{22} + \ddot{\theta}_{21} \cdot \theta_{22}$$

Les mêmes remarques sont encore valables.

Cas n°4 : $b_0$=-1 $b_{-1}$=1

Dans ce dernier cas, on a $d_0$=-$d_{-1}$=-$d_{-2}$
et

$$x_{FR1} = d_{-1}[\theta_{11} + \theta_{21}]$$

$$x_{F2} = -d_{-1}[\ddot{\theta}_{12} + \ddot{\theta}_{22}]$$

d'où

$$m(t) = -\theta_{11}\ddot{\theta}_{12} - \theta_{11}\ddot{\theta}_{22} - \theta_{21}\ddot{\theta}_{12} - \theta_{21}\ddot{\theta}_{22}$$

Les mêmes remarques sont encore valables.
Les deux signaux que reçoit le démodulateur 24 sont différents à la fois par leur rang et par la séquence pseudoaléatoire qu'ils impliquent : le signal $x_{FR1}$ a été retardé d'une durée $T_b$ et correspond donc, à l'émission, à un symbole de rang k-1, alors que le signal $x_{F2}$ correspond au symbole suivant de rang k ; par ailleurs, le signal $x_{FR1}$ provient d'un symbole qui a été étalé puis désétalé par la première séquence $C_{E1}$, alors que le signal $x_{F2}$ a été traité par la seconde séquence $C_{E2}$. Du fait du retard d'un rang entre les symboles en cause, on voit que les séquences $C_{E1}$ et $C_{E2}$ n'ont pas été émises au même moment à l'émission. Chaque séquence est bien émise périodiquement avec la même période $T_b$ que les symboles à traiter, mais la séquence $C_{E1}$ liée au signal $x_{FR1}$ a été émise un rang avant la séquence $C_{E2}$ liée au signal $x_{F2}$. Les deux séquences $C_{E1}$ et $C_{E2}$, bien que globalement produites simultanément par les générateurs $30_1$ et $30_2$, interviennent en fait de manière décalée d'un rang et cela du fait même du traitement opéré à la réception des séquences. On utilise donc toujours d'abord une séquence $C_{E1}$ puis une séquence $C_{E2}$.
La figure 7 schématise ce processus. La première séquence $C_{E1}$ est répétée périodiquement à chaque symbole $d_{k-1}$, $d_k$, $d_{k+1}$, etc..., de même que la seconde séquence $C_{E2}$. Ces séquences sont symbolisées par les rectangles des bandes supérieure et inférieure respectivement. A la réception, le signal de démodulation m(t) est formé à partir d'un signal $x_{FR1}$ qui tire son origine d'un symbole de rang k-1 traité par $C_{E1}$ et d'un signal $x_{F1}$ qui tire son origine d'un symbole de rang k traité par $C_{E2}$. La flèche oblique descendante allant d'une séquence $C_{E1}$ de rang k-1 à une séquence $C_{E2}$ de rang k symbolise la chronologie des séquences utilisées. Cette chronologie se répète à chaque formation d'un nouveau signal de démodulation. Toutes les flèches obliques descendantes symbolisent la transmission de tous les symboles $d_k$ lorsque k augmente d'unité en unité.

Dans le mode de réalisation illustré par les figures 5 et 6 cette distinction entre le rang des séquences mises en jeu n'a pas d'importance puisque, de toute façon, une séquence se répète identiquement à elle-même (la séquence $C_{E1}$ de rang k-1 est identique à la séquence $C_{E1}$ de rang k). Mais les distinctions qui viennent d'être mises en lumière permettent de mieux comprendre un perfectionnement de l'invention qui est le suivant.

On peut imaginer un récepteur qui utiliserait un premier filtre adapté sur $C_{E1}$ et qui ne serait pas suivi d'un circuit à retard, ce dernier étant associé en revanche au deuxième filtre adapté sur $C_{E2}$. On démodulerait alors les sauts de phase occasionnés par $C_{E2}$ et suivi par $C_{E1}$.

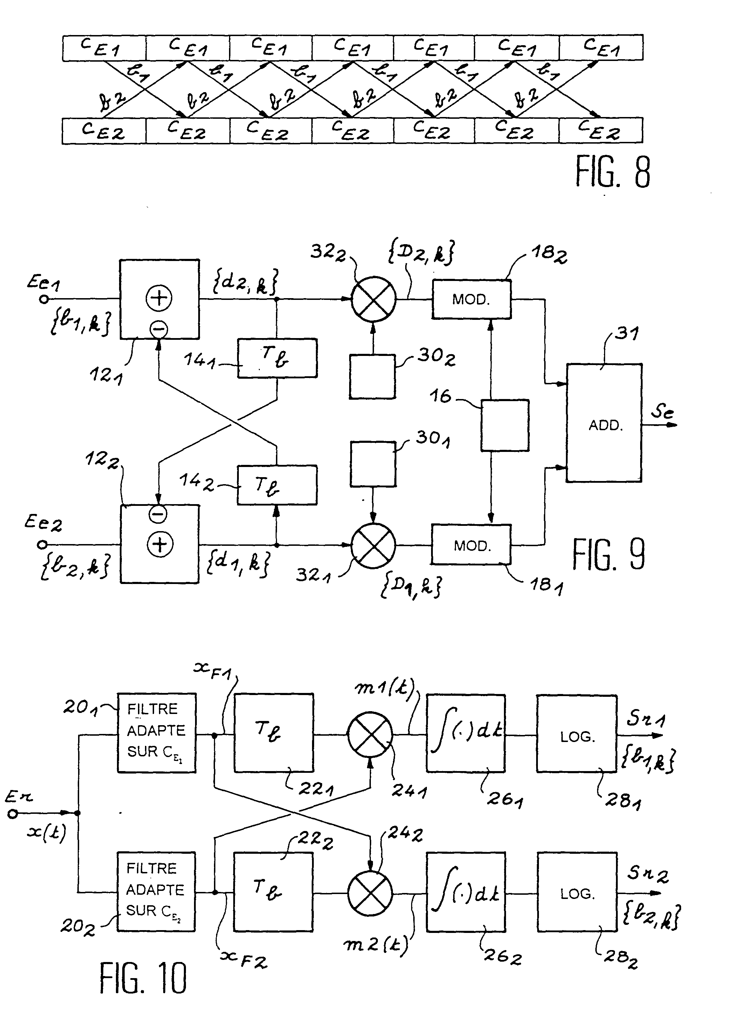

Autrement dit, on peut exploiter la présence de deux séquences pseudoaléatoires à l'émission en transmettant simultanément deux flux de données, et en détectant les sauts de phases dans les deux sens. C'est ce qui est représenté symboliquement sur la figure 8 où l'on voit, en haut, une succession de séquences pseudoaléatoires $C_{E1}$ et en bas une succession de séquences pseudoaléatoires $C_{E2}$. Des données $b_1$ imposent des sauts de phase entre une séquence $C_{E1}$ et la séquence suivante $C_{E2}$. Des données $b_2$ imposent des sauts de phase entre une séquence $C_{E2}$ et la séquence $C_{E1}$ suivante. Les flèches obliques montantes ou descendantes symbolisent les deux processus.

Les figures 9 et 10 montrent comment il faut modifier les schémas de l'émetteur et du récepteur par rapport aux figures 5 et 6 pour mettre en oeuvre cette double transmission. L'émetteur de la figure 9 présente deux entrées $Ee_1$, $Ee_2$ recevant deux flux de données binaires respectivement $b_{1,k}$ et $b_{2,k}$. Il comprend deux circuit logiques $12_1$, $12_2$ et deux circuits à retard $14_1$, $14_2$ dont l'entrée est connectée à la sortie d'un des circuits logiques et la sortie est reliée à l'entrée de l'autre circuit logique. Un premier multiplieur $32_1$ traite les symboles $d_{1,k}$ présents à la sortie du circuit logique $12_2$ et un second multiplieur $32_2$ les symboles $d_{2,k}$ présents à la sortie du circuit logique $12_1$. On retrouve ensuite un oscillateur local 16 délivrant la porteuse, deux modulateurs $18_1$, $18_2$ et un additionneur 31 délivrant sur sa sortie Se la porteuse doublement modulée.

Côté récepteur, tel qu'il est illustré sur la figure 10, on trouve deux voies symétriques et croisées au départ : une première voie avec un filtre $20_1$ adapté à la séquence $C_{E1}$ et un circuit à retard $22_1$ et une seconde voie avec un second filtre $20_2$ adapté à la séquence $C_{E2}$ et un circuit à retard $22_2$. La première voie comprend encore un multiplieur $24_1$, un intégrateur $26_1$ et une logique de décision $28_1$. La seconde voie comprend un multiplieur $24_2$, un intégrateur $26_2$ et une logique de décision $28_2$. Les circuits multiplieurs $24_1$, $24_2$ reçoivent, pour le premier, le signal filtré-retardé $x_{FR1}$ propre à la séquence $C_{E1}$ et le signal fitré $x_{F2}$ propre à la séquence $C_{E2}$ et, pour le second, le signal filtré-retardé $x_{FR2}$ propre à la séquence $C_{E2}$ et le signal filtré $x_{F1}$ propre à la séquence $C_{E1}$. Ces circuits $24_1$, $24_2$ délivrent des signaux de démodulation $m_1$ (t) et $m_2$ (t) qui, sont, comme pour la variante simple des figures 5 et 6, à valeur moyenne nulle en dehors de t=0. Les intégrateurs $26_1$, $26_2$ intégrent ces signaux, comme pour la figure 6, et deux circuits logiques de décision $28_1$, $28_2$ restituent sur deux sorties $Sr_1$, $Sr_2$ les deux flux de données $b_{1,k}$ et $b_{2,k}$.

Le fonctionnement de cet ensemble émetteur-récepteur est plus précisément le suivant.

Les symboles $d_{1,k}$ sont le résultat de la combinaison logique par OU-exclusif de $b_{2,k}$ et du complément de $d_{2,k-1}$. De même, les symboles $d_{2,k}$ sont le résultat de la combinaison logique de $b_{1,k}$ et du complément de $d_{1,k-1}$. On peut donc écrire :

$$d_{1,k} = b_{2,k} \oplus \overline{d_{2,k-1}}$$

$$d_{2,k} = b_{1,k} \oplus \overline{d_{1,k-1}}$$

La première séquence pseudoaléatoire $C_{E1}$ affecte les symboles $d_{1,k}$ tandis que la seconde séquence pseudoaléatoire $C_{E2}$ affecte les symboles $d_{2,k}$. Ces séquences étalent le spectre des symboles et l'on obtient de nouveaux symboles $D_{1,k}$ et $D_{2,k}$ à spectre étalé.

Dans le récepteur, le filtre $20_1$ de la voie supérieure, qui est adapté à $C_{E1}$, délivre un signal filtré $x_{F1}$ qui va dépendre du symbole $d_{2,k}$ affecté par $C_{E1}$ tandis que le filtre $20_2$ de la voie inférieure, qui est adapté à $C_{E2}$ délivre un signal $x_{F2}$ qui va dépendre du symbole $d_{2,k}$ qui a été affecté par $C_{E2}$. Mais le circuit à retard $22_2$ retarde le signal filtré $x_{F2}$ de sorte que le signal filtré-retardé $x_{FR2}$ dépend du symbole précédent, soit $d_{2,k-1}$, qui a été affecté par $C_{E2}$. La démodulation effectuée par le circuit $24_2$ porte donc sur une transition de $C_{E2}$ à $C_{E1}$, ce qui correspond à la donnée binaire $b_2$ du second flux de données et, sur la figure 8 à l'une des flèches obliques montantes.

Le même raisonnement, mais symétrique, montre que la voie supérieure du démodulateur traite les transitions de $C_{E1}$ vers $C_{E2}$, donc les données $b_1$.

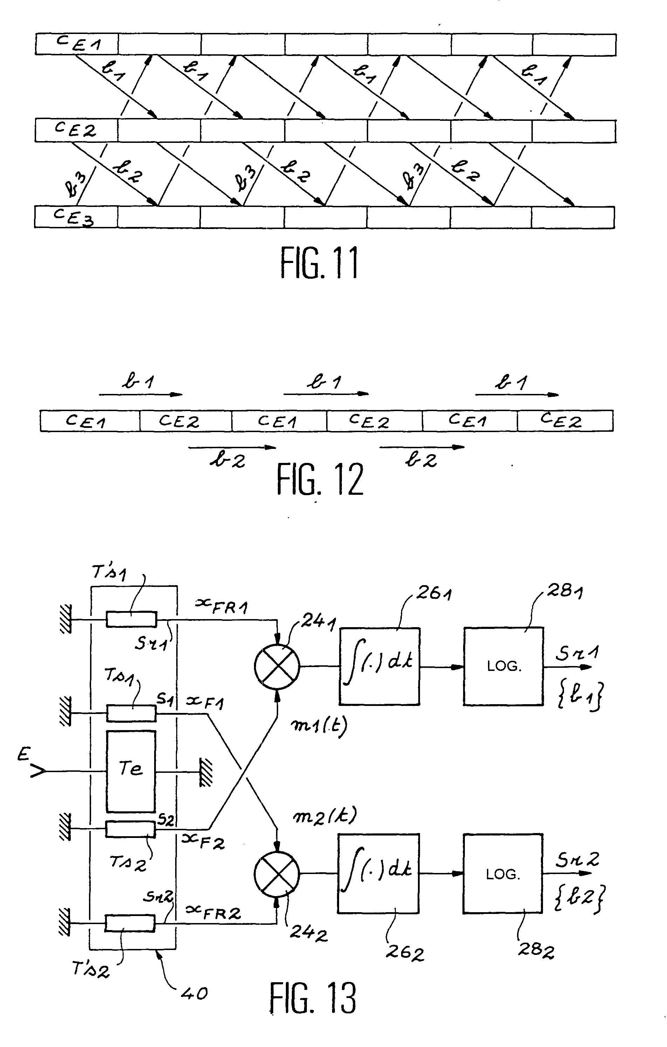

La description qui précède concerne l'émission de deux symboles et l'utilisation de deux séquences pseudoaléatoires orthogonales. Il est parfaitement possible d'étendre ce principe à n symboles et n séquences, où n est un entier supérieur à 2. Dans ce cas, on peut, par exemple, mettre en oeuvre une transmission dont la modulation est basée sur le principe de la figure 11 (à comparer à la figure 8) pour 3 symboles et 3 séquences.

Dans ce cas, le symbole $b_1$ module les sauts de phase entre une séquence $C_{E1}$ et la séquence $C_{E2}$ suivante ; le symbole $b_2$ module les sauts de phase entre une séquence $C_{E2}$ et la séquence $C_{E3}$ suivante ; et le symbole $b_3$ module les sauts de phase entre une séquence $C_{E3}$ et la séquence $C_{E1}$ suivante.

Tous les avantages décrits précédemment sont conservés.Il suffit pour cela que les n séquences utilisées soient orthogonales deux à deux.

Une autre mise en oeuvre du principe est illustré sur la figure 12 et permet de transmettre comme dans le cas de la figure 8 deux symboles mais avec des débits deux fois plus faibles et en utilisant toujours deux séquences pseudoaléatoires orthogonales. Dans ce cas, les deux séquences sont émises alternativement et le symbole $b_1$ module les sauts de phase entre une séquence CE1 et la séquence CE2 suivante alors que le symbole $b_2$ module les sauts de phase entre une séquence CE2 et la séquence CE1 suivante. L'avantage de cette réalisation est dû au fait qu'à un instant donné une seule séquence est émise et non deux, donc toute la puissance d'émission est utilisée pour cette séquence d'où une amélioration de la qualité du signal en réception. L'inconvénient en est la diminution du débit symbole.

La réalisation de l'émetteur correspondant se trouve légèrement simplifiée par rapport à la réalisation décrite à la figure 9, un seul modulateur suffit, il n'y a plus d'additionneur et la commutation des séquences est réalisée très facilement en numérique. Le récepteur possède par contre une structure strictement identique à celui décrit à la figure 10.

Un tel procédé de transmission de plusieurs bits à l'aide de plusieurs séquences pseudoaléatoires offre les avantages suivants par rapport aux procédés classiques :

- une meilleure résistance aux brouilleurs et aux interférences en large bande ou en bande étroite, compte tenu du passage dans deux filtres ayant des réponses impulsionnelles orthogonales avant démodulation,
- une diminution du bruit parasite en dehors des pics de corrélation (en valeur moyenne et efficace).

Toute la description qui précède concerne la transmission de symboles de type binaire, donc une modulation de phase à deux états. L'invention n'est naturellement pas limitée à ce cas et s'applique à des modulations de phase à un plus grand nombre d'états. Les réalisations classiques les plus fréquentes utilisent la modulation DQPSK à quatre états de phase permettant de transmettre des symboles à deux bits. La présente invention s'applique à cette modulation DQPSK. Les sauts de phase, pouvant prendre 4 valeurs possible, sont des sauts entre deux séquences orthogonales au lieu de l'être sur la même séquence comme dans le cas classique.

Les séquences pseudoaléatoires utilisées pour étaler le spectre ne sont pas non plus obligatoirement des séquences binaires. L'invention peut être mise en oeuvre avec des séquences possédant un plus grand nombre d'états, par exemple des séquences quaternaires, ou même des signaux pseudoaléatoires plus complexes.

Un cas particulier intéressant consiste à utiliser comme couple de séquences pseudoaléatoires orthogonales, deux séquences réciproques (l'une étant la renversée dans le temps de l'autre). Partant d'une séquence en C(t), on obtient une séquence réciproque en transformant t en $T_b$-t. L'utilisation de séquences réciproques est décrite par exemple dans le document WO 92/02997.

Cette utilisation de deux séquences réciproques permet de construire un récepteur utilisant un composant à ondes acoustiques de surface réalisant simultanément les opérations de filtrage adapté et de retard. Un récepteur utilisant un tel composant est décrit à la figure 13.

Le composant, référencé 40, comporte un transducteur d'entrée Te et quatre transducteurs de sortie $T_{s1}$, $T'_{s\,1}$, $T_{s2}$, $T'_{s\,2}$, constitués d'électrodes d'aluminium déposées sur un substrat piézoélectrique, par exemple du quartz. Ces quatre transducteurs sont reliés à quatre sorties $S_1$, $S_{r1}$, $S_2$, $S_{r2}$.

Les quatre transducteurs de sortie ont une réponse impulsionnelle identique de très courte durée, inférieure ou égale à la durée d'un élément des séquences pseudoaléatoires. La réponse impulsionnelle globale du composant est, dans ces conditions, imposée par la géométrie du transducteur d'entrée. Celle-ci comprend N électrodes élémentaires sous forme de peigne interdigité, interconnectées entre elles de manière à ce que la réponse impulsionnelle du filtre entre l'entrée E et une sortie $S_1$ soit égale au complexe conjugué inversé dans le temps de la première séquence $C_{E1}$. De façon évidente, si les deux transducteurs de sortie $T_{s1}$ et $T_{s2}$ sont disposés symétriquement de part et d'autre du transducteur d'entrée Te, les réponses impulsionnelles des deux filtres ainsi constitués seront réciproques l'une de l'autre.

De la même manière, en disposant deux transducteurs éloignés $T'_{s\,1}$ et $T'_{s\,2}$ sur le substrat, de manière à ce que la distance entre $T_{s1}$ et $T_{s2}$ ou entre $T'_{s\,1}$ et $T'_{s\,2}$ soit telle que le temps mis par l'onde acoustique de RAYLEIGH pour parcourir l'intervalle séparant les transducteurs soit égal à $T_b$, on aura réalisé, sur le même composant, deux lignes à retard de durée $T_b$. On peut donc utiliser ce composant unique 40 dans un récepteur différentiel à étalement de spectre utilisant des séquences alternées réciproques.

On peut bien évidemment utiliser également deux composants distincts, comportant chacun un transducteur d'entrée adapté à l'une des deux séquences orthogonales et deux transducteurs de sortie permettant d'obtenir les signaux filtrés et les signaux filtrés-retardés.

**Revendications**

1. Procédé de transmission de données par modulation et démodulation différentielle de phase à étalement de spectre, les données étant organisées en au moins une suite de données binaires ($b_k$) ayant une certaine période ($T_b$), caractérisé par le fait que :

   A) à l'émission :

   - on effectue un codage différentiel des données binaires à transmettre ($b_k$) pour obtenir des symboles ($d_k$), on utilise une première et une seconde séquences pseudoaléatoires orthogonales ($C_{E1}$, $C_{E2}$) pour étaler le spectre de chaque symbole et on module une porteuse (P) par les symboles à spectre étalé ($D_k$),

   B) à la réception:

   - on effectue un premier et un second filtrages parallèles adaptés aux première et seconde séquences pseudoaléatoires orthogonales ($C_{E1}$, $C_{E2}$) et on estime la différence de phase entre les deux signaux ($x_{F2}$, $x_{FR1}$) obtenus après filtrage l'un ($x_{FR1}$) ayant été retardé, ce qui restitue les données ($b_k$).

2. Procédé selon la revendication 1, caractérisé par le fait que, les données à transmettre étant organisées en une suite unique de données binaires ($b_k$) :

   A) à l'emission:

   - on engendre la première séquence pseudoaléatoire ($C_{E1}$),
   - on multiplie les symboles ($d_k$) par cette première séquence pseudoaléatoire ($C_{E1}$), pour obtenir des premiers symboles à spectre étalé (($D_k)_1$),
   - on engendre la seconde séquence pseudoaléatoire ($C_{E2}$) orthogonale à la première ($C_{E1}$),
   - on multiplie les symboles ($d_k$) également par cette seconde séquence pseudoaléatoire ($C_{E2}$), pour obtenir des seconds symboles à spectre étalé (($D_k)_2$),
   - on module la porteuse (P) par les premiers (($D_k)_1$) et les seconds symboles (($D_k)_2$) à spectre étalé,

   B) à la réception :

   - on reçoit la porteuse modulée ($x(t)$),
   - on effectue le premier filtrage du signal reçu ($x(t)$) par un premier filtre adapté ($20_1$) ayant une réponse impulsionnelle qui est la renversée dans le temps de la première séquence pseudoaléatoire utilisée à l'émission ($C_{E1}$) et l'on obtient le premier signal filtré ($x_{F1}$),
   - on effectue le second filtrage du signal reçu ($x(t)$) par un second filtre adapté ($20_2$) ayant une réponse impulsionnelle qui est la renversée dans le temps de la seconde séquence pseudoaléatoire utilisé à l'émission ($C_{E2}$) et l'on obtient le second signal filtré ($x_{F2}$),
   - on retarde d'une période ($T_b$) de données binaires ($b_{1,k}$)($b_{2,k}$) l'un des signaux filtrés ($x_{F1}$) pour obtenir le signal filtré-retardé ($x_{FR1}$),
   - on multiplie le signal filtré-retardé ($x_{FR1}$) par le signal filtré ($x_{F2}$) pour obtenir un signal de démodulation ($m(t)$).

3. Procédé selon la revendication 1, caractérisé par le fait que, les données étant organisées en au moins deux suites distinctes de données binaires ($b_{1,k}$)($b_{2,k}$) de même période ($T_b$), il comprend les opérations suivantes :

   A) à l'émission :

   - on constitue une première et une seconde suites de symboles ($d_{1,k}$) ($d_{2,k}$) à partir des deux suites de données binaires ($b_{1,k}$) ($b_{2,k}$), un symbole d'une suite ($d_{2,k}$) ($d_{1,k}$) étant obtenu par une combinaison logique entre une donnée ($b_{1,k}$), ($b_{2,k}$) et un symbole de l'autre suite retardé ($d_{1,k-1}$, $d_{2,k-1}$) d'une durée égale à la période ($T_b$) de données binaires ($b_{1,k}$)($b_{2,k}$)

- on engendre la première séquence pseudoaléatoire ($C_{E1}$) et on multiplie les symboles de la première suite ($d_{1,k}$) par cette première séquence pseudoaléatoire ($C_{E1}$) pour obtenir une première suite de symboles à spectre étalé ($D_{1,k}$),
- on engendre la seconde séquence pseudoaléatoire ($C_{E2}$) orthogonale à la première ($C_{E1}$) et on multiplie les symboles de la seconde suite ($d_{2,k}$) par cette seconde séquence pseudoaléatoire ($C_{E2}$), pour obtenir une seconde suite de symboles à spectre étalé ($D_{2,k}$),
- on module la porteuse (P), d'une part, par la première suite de symboles à spectre étalé ($D_{1,k}$) et, d'autre part, par la seconde suite de symboles à spectre étalé ($D_{2,k}$),
- on additionne les deux parties modulées de la porteuse et l'on émet la porteuse résultante,

B) à la réception:

- on reçoit la porteuse modulée ($x(t)$),
- on effectue le premier filtrage du signal reçu ($x(t)$) par un premier filtre (201) adapté ayant une réponse impulsionnelle qui est la renversée dans le temps de la première séquence pseudoaléatoire utilisée à l'émission ($C_{E1}$) et l'on obtient le premier signal filtré ($x_{F1}$),
- on effectue le second filtrage du signal reçu ($x(t)$) par un second filtre adapté ($20_2$) ayant une réponse impulsionnelle qui est la renversée dans le temps de la seconde séquence pseudoaléatoire utilisée à l'émission ($C_{E2}$) et l'on obtient le second signal filtré ($x_{F2}$),
- on retarde le premier signal filtré ($x_{F1}$) d'une durée égale à la période ($T_b$) des données binaires ($b_{1,k}$) ($b_{2,k}$) et l'on obtient le premier signal filtré-retardé ($x_{FR1}$),
- on retarde le second signal filtré ($x_{F2}$) d'une durée égale à la période ($T_b$) des données binaires ($b_{1,k}$)($b_{2,k}$) et l'on obtient un second signal filtré-retardé ($x_{FR2}$),
- on multiplie le premier signal filtré-retardé ($x_{FR1}$) par le second signal filtré ($x_{F2}$) pour obtenir un premier signal de démodulation ($m_1(t)$),
- on multiplie le second signal filtré-retardé ($x_{FR2}$) par le premier signal filtré ($x_{F1}$) pour obtenir un second signal de démodulation ($m_2(t)$),
- on intègre le premier signal de démodulation ($m_1(t)$) sur une durée égale à la période ($T_b$) des données binaires ($b_{1,k}$) ($b_{2,k}$),
- on intègre le second signal de démodulation ($m_2(t)$) sur une durée égale à la période ($T_b$) des données binaires ($b_{1,k}$) ($b_{2,k}$),
- on apprécie le signe du signal résultant de l'intégration du premier signal de démodulation ($m_1(t)$) et l'on restitue en conséquence les données binaires de la première suite ($b_{1,k}$),
- on apprécie le signe du signal résultant de l'intégration du second signal de démodulation ($m_2(t)$) et l'on restitue en conséquence les données binaires de la seconde suite ($b_{2,k}$).

**4.** Procédé selon la revendication 3, caractérisé par le fait qu'on émet alternativement les deux séquences pseudoaléatoires (CE1, CE2) orthogonales, un premier symbole ($b_1$) modulant les sauts de phase entre la première séquence (CE1) et la seconde séquence suivante (CE2), alors qu'un second symbole ($b_2$) module les sauts de phase entre la seconde séquence (CE2) et la première (CE1).

**5.** Procédé selon la revendication 3 caractérisé par le fait que les données binaires (bk) étant organisées en un nombre n de suites, n étant un entier supérieur à 2, on engendre n séquences pseudoaléatoires orthogonales deux à deux et l'on transmet les données de deux suites à l'aide de deux desdites n sequences pseudoaléatoires orthogonales (CE1, CE2).

**6.** Procédé selon l'une quelconque des revendications précédentes, caractérisé par le fait que les symboles ($d_k$) sont à un élément binaire.

**7.** Procédé selon l'une quelconque des revendications 1 à 5, caractérisé par le fait que les symboles ($d_k$) sont à deux éléments binaires.

**8.** Procédé selon l'une quelconque des revendications précédentes, caractérisé par le fait que les première et seconde séquences pseudoaléatoires ($C_{E1}$, $C_{E2}$) sont des séquences binaires.

**9.** Procédé selon l'une quelconque des revendications 1 à 7, caractérisé par le fait que les première et seconde séquences pseudoaléatoires ($C_{E1}$, $C_{E2}$) sont des séquences quaternaires.

**10.** Procédé selon l'une quelconque des revendications précédentes, caractérisé par le fait que deux séquences pseudoaléatoires ($C_{E1}$, $C_{E2}$) orthogonales sont des séquences réciproques.

**Patentansprüche**

**1.** Verfahren zur Übertragung von Daten durch Spreizspektrumsdifferenzmodulation und -demodulation, wobei die Daten als wenigstens eine Folge binärer Daten ($b_k$) mit einer bestimmtene Periode ($T_b$) organisiert sind, **dadurch gekennzeichnet,** dass dieses Verfahren folgende Operationen umfasst:

A) beim Senden:

- man führt eine Differentialcodierung der zu übertragenden binären Daten ($b_k$) durch, um Symbole ($d_k$) zu erhalten, benutzt eine erste und eine zweite rechtwinklige Pseudozufallssequenz ($C_{E1}$, $C_{E2}$), um das Spektrum jedes Symbols zu spreizen und man moduliert eine Trägerwelle (P) durch die Spreizspektrumssymbole ($D_k$),

B) beim Empfangen:

- man führt ein erstes und ein zweites paralleles Filtern durch, angepasst an die erste und zweite rechtwinklige Pseudozufallssequenz ($C_{E1}$, $C_{E2}$), und man bewertet die Phasendifferenz zwischen den beiden nach dem Filtern erhaltenen Signalen ($x_{F2}$, $X_{FR1}$), wobei das eine ($x_{FR1}$) verzögert worden ist, was die Daten ($b_k$) wiederherstellt.

**2.** Verfahren nach Anspruch 1, dadurch gekennzeichnet, wobei die zu übertragenden Daten als eine einzige Folge binärer Daten ($b_k$) organisiert sind, dass es folgende Operationen umfasst:

A) beim Senden:

- man erzeugt die erste Pseudozufallssequenz ($C_{E1}$),
- man multipliziert die Symbole ($d_k$) mit dieser ersten Zufallssequenz ($C_{E1}$), um erste Spreizspektrumsymbole (($D_k$)$_1$) zu erhalten,
- man erzeugt die zweite Pseudozufallssequenz ($C_{E2}$) rechtwinklig zu der ersten ($C_{E1}$),
- man multipliziert die Symbole ($d_k$) ebenfalls mit dieser zweiten Pseudozufallssequenz ($C_{E2}$), um zweite Spreizspektrumssymbole (($D_k$)$_2$) zu erhalten,
- man moduliert die Trägerwelle (P) durch die ersten (($D_k$)$_1$) und die zweiten Spreizspektrumssymbole (($D_k$)$_2$),

B) beim Empfangen:

- man empfängt die modulierte Trägerwelle (x(t)),
- man führt das erste Filtern des empfangenen Signals (x(t)) durch ein erstes angepasstes Filter ($20_1$) durch, dessen Impulsreaktion die zeitliche Umkehrung der beim Senden benutzten ersten Pseudozufallssequenz ($C_{E1}$) ist und man erhält das erste gefilterte Signal ($X_{F1}$),
- man führt das zweite Filtern des empfangenen Signals (x(t)) durch ein zweites angepasstes Filter ($20_2$) durch, dessen Impulsreaktion die zeitliche Umkehrung der beim Senden benutzten zweiten Pseudozufallssequenz ($C_{E2}$) ist und man erhält das zweite gefilterte Signal ($X_{F2}$),
- man verzögert eines der gefilterten Signale ($X_{F1}$) um eine Periode ($T_b$) der binären Daten ($b_{1,k}$) ($b_{2,k}$), um das gefiltert-verzögerte Signal ($x_{FR1}$) zu erhalten,
- man multipliziert das gefiltert-verzögerte Signal ($x_{FR1}$) mit dem gefilterten Signal ($x_{F2}$), um ein Demodulationssignal (m(t)) zu erhalten.

**3.** Verfahren nach Anspruch 1, dadurch gekennzeichnet, wobei die Daten als wenigstens zwei verschiedene Binärdatenfolgen ($b_{1,k}$) ($b_{2,k}$) derselben Periode ($T_b$) organisiert sind, dass es die folgenden Operationen umfasst:

A) beim Senden:

- man bildet aufgrund der beiden Binärdatenfolgen $(b_{1,k})$ $(b_{2,k})$ eine erste und eine zweite Folge von Symbolen $(d_{1,k})$ $(d_{2,k})$, wobei man ein Symbol einer Folge $(d_{2,k})$ $(d_{1,k})$ durch eine logische Kombination zwischen einer gegebenen Größe $(b_{1,k})$ $(b_{2,k})$ und einem Symbol der anderen, verzögerten Folge $(d_{1,K-1}, d_{2,K-1})$ einer Dauer gleich der Periode $(T_b)$ der binären Daten $(b_{1,k})$ $(b_{2,k})$ erhält,
- man erzeugt die erste Pseudozufallssequenz $(C_{E1})$ und man multipliziert die Symbole der ersten Folge $(d_{1,k})$ mit dieser ersten Pseudozufallssequenz $(C_{E1})$, um eine erste Folge von Spreizspektrumssymbolen $(D_{1,k})$ zu erhalten,
- man erzeugt die zweite Pseudozufallssequenz $(C_{E2})$ rechtwinklig zu der ersten $(C_{E1})$ und man multipliziert die Symbole der zweiten Folge $(d_{2,k})$ mit dieser zweiten Ppeudozufallssequenz $(C_{E1})$, um eine zweite Folge von Spreizspektrumsymbolen $(D_{2,k})$ zu erhalten,
- man addiert die beiden modulierten Teile der Trägerwelle und man sendet die resultierende Trägerwelle,

B) beim Empfangen:

- man empfängt die modulierte Trägerwelle $(x(t))$,
- man führt ein erstes Filtern des empfangenen Signals $(x(t))$ durch ein erstes angepasstes Filter $(20_1)$ durch, dessen Impulsreaktion die zeitliche Umkehrung der beim Senden benutzten ersten Pseudozufallssequenz $(C_{E1})$ ist und man erhält das erste gefilterte Signal $(x_{F1})$,
- man führt das zweite Filtern des empfangenen Signals $(x(t))$ durch ein zweites angepasstes Filter $(20_2)$ durch, dessen Impulsreaktion die zeitliche Umkehrung der beim Senden benutzten zweiten Pseudozufallssequenz $(C_{E2})$ ist und man erhält das zweite gefilterte Signal $(x_{F2})$,
- man verzögert das erste gefilterte Signal $(x_{F1})$ um eine Dauer gleich der Periode $(T_b)$ der binären Daten $(b_{1,k})$ $(b_{2,k})$ und erhält das erste gefiltert-verzögerte Signal $(x_{FR1})$,
- man verzögert das zweite gefilterte Signal $(x_{F2})$ um eine Dauer gleich der Periode $(T_b)$ der binären Daten $(b_{1,k})$ $(b_{2,k})$ und erhält das zweite gefiltert-verzögerte Signal $(x_{FR2})$,
- man multipliziert das erste gefiltert-verzögerte Signal $(x_{FR1})$ mit dem zweiten gefilterten Signal $(x_{F2})$, um ein Demodulationssignal $(m_1(t))$ zu erhalten,
- man multipliziert das zweite gefiltert-verzögerte Signal $(x_{FR2})$ mit dem ersten gefilterten Signal $(x_{F1})$, um ein zweites Demodulationssignal $(m2(t))$ zu erhalten,
- man integriert das erste Demodulationssignal $(m_1(t))$ über eine Dauer gleich der Periode $(T_b)$ der binären Daten $(b_{1,k})$ $(b_{2,k})$,
- man integriert das erste Demodulationssignal $(m_2(t))$ über eine Dauer gleich der Periode $(T_b)$ der binären Daten $(b_{1,k})$ $(b_{2,k})$,
- man bewertet das Vorzeichen des Signals, das aus der Integration des ersten Demodulationssignals $(m_1(t))$ resultiert und stellt dementsprechend die binären Daten der ersten Folge $(b_{1,k})$ wieder her,
- man bewertet das Vorzeichen des Signals, das aus der Integration des zweiten Demodulationssignals $(m_2(t))$ resultiert und stellt dementsprechend die binären Daten der zweiten Folge $(b_{2,k})$ wieder her.

4. Verfahren nach Anspruch 3, dadurch gekennzeichnet, dass man alternativ die beiden rechtwinkligen Pseudozufallssequenzen $(C_{E1}, C_{E2})$ sendet, wobei ein erstes Symbol $(b_1)$ die Phasensprünge zwischen der ersten Sequenz $(C_{E1})$ und der nachfolgenden zweiten Sequenz $(C_{E2})$ moduliert, während ein zweites Symbol $(b_2)$ die Phasensprünge zwischen der zweiten Sequenz $(C_{E2})$ und der ersten $(C_{E1})$ moduliert.

5. Verfahren nach Anspruch 3, dadurch gekennzeichnet, dass die binären Daten $(b_k)$ als eine Anzahl n von Folgen organisiert sind, wobei n eine ganze Zahl größer als 2 ist, man n rechtwinklige Pseudozufallssequenzen paarweise erzeugt und man die Daten von zwei Folgen mit Hilfe von zwei der n genannten rechtwinkligen Pseudozufallssequenzen $(C_{E1}, C_{E2})$ sendet.

6. Verfahren nach einem der vorangehenden Ansprüche, dadurch gekennzeichnet, dass die Symbole $(d_k)$ ein binäres Element umfassen.

7. Verfahren nach einem der Ansprüche 1 bis 5, dadurch gekennzeichnet, dass die Symbole $(d_k)$ zwei binäre Elemente umfassen.

8. Verfahren nach einem der vorangehenden Ansprüche, dadurch gekennzeichnet, dass die erste und die zweite Pseudozufallssequenz $(C_{E1}, C_{E2})$ binäre Sequenzen sind.

**9.** Verfahren nach einem der Ansprüche 1 bis 7, dadurch gekennzeichnet, dass die erste und die zweite Pseudozufallssequenz ($C_{E1}$, $C_{E2}$) quarternäre Sequenzen sind.

**10.** Verfahren nach einem der vorangehenden Ansprüche, dadurch gekennzeichnet, dass die beiden rechtwinkligen Pseudozufallssequenzen ($C_{E1}$, $C_{E2}$) reziproke Sequenzen sind.

**Claims**

**1.** Process for data transmission by spectrum spread phase differential modulation and demodulation, the data being organized in at least one binary data sequence ($b_k$ having a certain period ($T_b$), characterized in that:

A) on transmission:

- there is a differential coding of the binary data to be transmitted ($b_k$) to obtain symbols ($d_k$), use being made of a first and a second orthogonal pseudorandom sequences ($C_{E1}$, $C_{E2}$) in order to spread the spectrum of each symbol and a carrier (P) is modulated by the spread spectrum symbols ($D_k$),

B) on reception:

- a first and a second parallel filtering operations matched to the first and second pseudorandom orthogonal sequences ($C_{E1}$, $C_{E2}$) are performed and the phase difference is estimated between the two signals ($x^2_F$, $x^2_{FR}$) obtained after filtering, one ($x^{R1}_F$) having been delayed, which restores the data ($b_k$).

**2.** Process according to claim 1, characterized in that with the data to be transmitted organized in a single binary data sequence ($b_k$) :

A) on transmission:

- the first pseudorandom sequence ($C_{E1}$) is produced,
- the symbols ($d_k$) are multiplied by said first pseudorandom sequence ($C_{E1}$) in order to obtain first spread spectrum symbols ($(D_k)_1$),
- the second pseudorandom sequence ($C_{E2}$) orthogonal to the first ($C_{E1}$) is produced,
- the symbols ($d_k$) are also multiplied by said second pseudorandom sequence ($C_{E2}$) in order to obtain second spread spectrum symbols ($(D_k)_2$),
- the carrier (P) is modulated by the first spread spectrum symbols ($(D_k)_1$) and the second spread spectrum symbols ($(D_k)_2$),

B) on reception:

- the modulated carrier (x(t)) is received,
- the first filtering takes place of the received symbol (x(t)) by a first matched filter ($20_1$) having a pulse response, which is the time inverse of the first pseudorandom sequence used on transmission ($C_{E1}$) and the first filtered signal ($X_{F1}$) is obtained,
- the second filtering of the signal received (x(t)) is performed by a second matched filter ($20_2$) having a pulse response, which is the time inverse of the second pseudorandom sequence used on transmission ($C_{E2}$) and the second filtered signal ($x_{F2}$) is obtained,
- one of the filtered signals ($x_{F1}$) is delayed by one period ($T_b$) of binary data ($b_{1,k}$)($b_{zk}$) to obtain the filtered, delayed signal ($x^1_{FR}$),
- the filtered, delayed signal ($x^1_{FR}$) is multiplied by the filtered signal ($x_{F2}$) to obtain a demodulation signal (m(t)).

**3.** Process according to claim 1, characterized in that, the data being organized in at least two separate sequences of binary data ($b_{1,k}$) ($b_{2,k}$) of the same period ($T_b$), it comprises the following operations:

A), on transmission:

- a first and a second sequence of symbols ($d_{1,k}$) ($d_{2,k}$) is formed from two binary data sequences ($b_{1,k}$)

$(b_{2,k})$, one symbol of a sequence $(d_{2,k})$ $(d_{1,k})$ being obtained by a logic combination between a data item $(b_{1,k})$, $(b_{2,k})$ and a symbol of the other sequence $(d_{1,k-1},\ d_{2,k-1})$ delayed by a period equal to the period $(T_b)$ of binary data $(b_{1,k})(b_{2,k})$,

- the first pseudorandom sequence $(C_{E1})$ is produced and the symbols of the first sequence $(d_{1,k})$ is multiplied by said first pseudorandom sequence $(C_{E1})$ in order to obtain a first sequence of spread spectrum symbols $(D_{1,k})$,
- the second pseudorandom sequence $(C_{E2})$, orthogonal to the first sequence $(C_{E1})$ is produced and the symbols of the second sequence $(d_{2,k})$ are multiplied by said second pseudorandom sequence $(C_{E2})$ to obtain a second sequence of spread spectrum symbols $(D_{2,k})$,
- the carrier (P) is modulated on the one hand by the first sequence of spread spectrum symbols $(D_{1,k})$ and on the other by the second sequence of spread spectrum symbols $(D_{2,k})$,
- the two modulated parts of the carrier are summated and the resulting carrier is transmitted,

B) on reception:

- the modulated carrier (x(t)) is received,
- there is the first filtering of the signal received (x(t)) by a first matched filter $(20_1)$ having a pulse response, which is the time inverse of the first pseudorandom sequence used on transmission $(C_{E1})$ and the first filtered signal $(x_{F1})$ is obtained,
- there is the second filtering of the signal received (x(t)) by a second matched filter $(20_2)$ having a pulse response, which is the time inverse of the second pseudorandom sequence used on transmission $(C_{E2})$ and the second filtered signal $(x_{F2})$ is obtained,
- the first filtered signal $(x_{F1})$ is delayed by a period equal to the period $(T_b)$ of the binary data $(b_{1,k})$ $(b_{2,k})$ and the first filtered, delayed signal $(x_{FR1})$ is obtained,
- the second filtered signal $(x_{F2})$ is delayed by a period equal to the period $(T_b)$ of the binary data $(b_{1,k})$ $(b_{2,k})$ and a second filtered, delayed signal $(x_{FR2})$ is obtained,
- the first filtered, delayed signal $(x_{FR1})$ is multiplied by the second filtered signal $(x_{F2})$ to obtain a first demodulation signal (m1(t)),
- the second filtered, delayed signal $(x_{FR2})$ is multiplied by the first filtered signal $(x_{F1})$ to obtain a second demodulation signal (m2(t)),
- the first demodulation signal (m1(t)) is integrated for a duration equal to the period $(t_b)$ of the binary data $(b_{1,k})$ $(b_{2,k})$,
- the second demodulation signal (m2(t)) is integrated on a duration signal to the period $(T_b)$ of the binary data $(b_{1,k})$ $(b_{2,k})$,
- an evaluation takes place of the sign of the signal resulting from the integration of the first demodulation signal (m1(t)) and as a consequence restoration takes place of the binary data of the first sequence $(b_{1,k})$,
- evaluation takes place of the sign of the signal resulting from the integration of the second demodulation signal (m2(t)) and as a consequence the binary data of the second sequence $(b_{2,k})$ is restored.

**4.** Process according to claim 3, characterized in that alternate transmission takes place of the two orthogonal pseudorandom sequences (CE1, CE2), a first symbol (b1) modulating the phase jumps between the first sequence $(C_{E1})$ and the second, following sequence $(C_{E2})$, whereas a second symbol (b2) modulates the phase jumps between the second sequence $(C_{E2})$ and the first sequence $(C_{E1})$.

**5.** Process according to claim 3, characterized in that with the binary data $(b_k)$ organized in a number n of sequences, n being an integer higher than 2, n pairwise orthogonal pseudorandom sequences are produced and the data of the two sequences are transmitted with the aid of two of said n orthogonal pseudorandom sequences $(C_{E1}, C_{E2})$.

**6.** Process according to any one of the preceding claims, characterized in that the symbols $(d_k)$ are one bit.

**7.** Process according to any one of the claims 1 to 5, characterized in that the symbols $(d_k)$ are two bits.

**8.** Process according to any one of the preceding claims, characterized in that the first and second pseudorandom sequences $(C_{E1}, C_{E2})$ are binary sequences.

**9.** Process according to any one of the claims 1 to 7, characterized in that the first and second pseudorandom sequences $(C_{E1}, C_{E2})$ are quaternary sequences.

**10.** Process according to any one of the preceding claims, characterized in that the two orthogonal pseudorandom sequences ($C_{E1}$, $C_{E2}$) are reciprocal sequences.

FIG. 1

FIG. 2

EP 0 718 983 B1

FIG. 3

FIG. 4

20

FIG. 5

FIG. 6

FIG. 7

FIG. 8

FIG. 9

FIG. 10

FIG. 11

FIG. 12

FIG. 13